# EUROPEAN PATENT APPLICATION

(11) **EP 4 696 570 A1**
(43) Date of publication of application: **18.02.2026**
(21) Application number: 23935716.3
(22) Date of filing: 04.12.2023
(51) Int. Cl.: B60T 17/18, B60T 13/74

(54) **DUAL-BACKUP VEHICLE BRAKING SYSTEM AND VEHICLE**

(30) Priority: 30.04.2023 CN 202310488938
(71) Applicant: Huawei Digital Power Technologies Co., Ltd., Shenzhen, Guangdong 518043 (CN)
(72) Inventor: NI, Hui, Shenzhen, Guangdong 518043 (CN); HUANG, Chongxi, Shenzhen, Guangdong 518043 (CN); ZHANG, Yunguang, Shenzhen, Guangdong 518043 (CN); TANG, Jiayu, Shenzhen, Guangdong 518043 (CN)
(74) Representative: Maiwald GmbH
(86) International application number: PCT/CN2023/136185
(87) International publication number: WO 2024/227346

(57) **Abstract**

This application provides a dual-backup brake system of a vehicle and a vehicle, to reduce costs of the brake system and decrease difficulty of deploying the brake system on the vehicle. The brake system includes a first controller, a second controller, a backup brake apparatus, a front wheel brake apparatus, and a rear wheel brake apparatus. The front wheel brake apparatus and the rear wheel brake apparatus each includes a brake motor and a brake. The brake is configured to receive a brake force output by the brake motor or the backup brake apparatus. The first controller is configured to: based on a vehicle travel signal and a brake signal that is output by a brake pedal of the vehicle, output a first control signal, and control the brake motor of the front wheel brake apparatus to output a brake force, or control the brake of the front wheel brake apparatus and the brake of the rear wheel brake apparatus to receive the brake force output by the backup brake apparatus. The second controller is configured to: based on the first control signal, control the brake motor of the rear wheel brake apparatus to output the brake force, or control the brake of the front wheel brake apparatus and the brake of the rear wheel brake apparatus to receive the brake force output by the backup brake apparatus.

## Description

This application claims priority to Chinese Patent Application No. 202310488938.1, filed with the China National Intellectual Property Administration on April 30, 2023 and entitled "DUAL-BACKUP BRAKE SYSTEM OF VEHICLE AND VEHICLE", which is incorporated herein by reference in its entirety.

### TECHNICAL FIELD

This application relates to the field of vehicle technologies, and in particular, to a dual-backup brake system of a vehicle and a vehicle.

### BACKGROUND

An electro-mechanical brake (electro-mechanical brake, EMB) is an electric brake apparatus that uses a motor to drive a mechanical piston to brake a wheel. Compared with a conventional hydraulic brake apparatus, the EMB has advantages of fast response, high precision, and no risk of liquid leakage. Therefore, the EMB is widely used in vehicle brake systems. EMBs are disposed at wheels of a vehicle. A plurality of EMBs are usually connected to a motor control unit (motor control unit, MCU) through a CAN to implement mutual communication.

Currently, two MCUs are usually disposed in a brake system of a vehicle to separately control EMBs. The two MCUs have same functions and provide redundancy for each other. When one of the MCUs fails, the other MCU may still be used to brake the vehicle. Although this design can ensure brake safety of the vehicle, difficulty of deploying the brake system is increased, and costs of the brake system rise.

### SUMMARY

This application provides a dual-backup brake system of a vehicle and a vehicle, to reduce costs of the brake system and decrease difficulty of deploying the brake system on the vehicle while ensuring brake safety of the vehicle.

According to a first aspect, this application provides a dual-backup brake system of a vehicle. The brake system includes a first controller, a second controller, a backup brake apparatus, two front wheel brake apparatuses, and two rear wheel brake apparatuses. The front wheel brake apparatuses and the rear wheel brake apparatuses each includes a brake motor and a brake. The brake is configured to: receive a brake force output by the brake motor or the backup brake apparatus, and brake a wheel of the vehicle. The first controller is configured to: based on a vehicle travel signal and a brake signal that is output by a brake pedal of the vehicle, output a first control signal, and control brake motors of the two front wheel brake apparatuses to output brake forces, or control brakes of the two front wheel brake apparatuses and brakes of the two rear wheel brake apparatuses to receive the brake force output by the backup brake apparatus. The second controller is configured to: control, based on the first control signal, brake motors of the two rear wheel brake apparatuses to output brake forces, or control, based on the brake signal, the brake motors of the two rear wheel brake apparatuses to output brake forces, or control the brakes of the two front wheel brake apparatuses and the brakes of the two rear wheel brake apparatuses to receive the brake force output by the backup brake apparatus.

In this application, the first controller can control the brake motors of the front wheel brake apparatuses to output the brake forces or control the backup brake apparatuses to output the brake forces, and the second controller can control the brake motors of the rear wheel brake apparatuses to output the brake forces or control the backup brake motor to output the brake force. Therefore, the first controller and the second controller provide redundancy for each other. When one of the controllers fails, the brake system can also implement a brake function through control of the other controller. This improves brake safety of the vehicle. Because there is no signal connection relationship between the first controller and the two rear wheel brake apparatuses, and there is no signal connection relationship between the second controller and the two front wheel brake apparatuses, to some extent, a requirement on performance of the first controller and the second controller can be lower, and cabling difficulty of the brake system can be decreased. Therefore, costs of the brake system can be reduced, and difficulty of deploying the brake system on the vehicle can be decreased.

In an implementation, the second controller is configured to: in response to the first controller and the two front wheel brake apparatuses running in a normal state, control, based on the first control signal, the brake motors of the two rear wheel brake apparatuses to output the brake forces; and in response to the first controller or at least one of the brake motors of the two front wheel brake apparatuses being in an abnormal state, control, based on the brake signal, the brake motors of the two rear wheel brake apparatuses to output the brake forces, or control the brakes of the two front wheel brake apparatuses and the brakes of the two rear wheel brake apparatuses to receive the brake force output by the backup brake apparatus. In this design, even if an exception occurs in the first controller or the brake motors of the two front wheel brake apparatuses, the second controller can still brake the vehicle in time in the foregoing two manners. This ensures driving safety of the vehicle.

In an implementation, the first controller is configured to send a first periodic signal to the second controller. The second controller is configured to: determine, in response to receiving the first periodic signal within a predetermined period, that the first controller is in the normal state or the two front wheel brake apparatuses are in the normal state; and determine, in response to not receiving the first periodic signal within the predetermined period, that the first controller or the at least one of the brake motors of the two front wheel brake apparatuses is in the abnormal state. The first controller sends a periodic signal to the second controller, so that the second controller can accurately determine a state of the first controller or states of the two front wheel brake apparatuses, so that the second controller can brake the vehicle in a proper brake manner in time.

In an implementation, the first controller is configured to: in response to the second controller and the two rear wheel brake apparatuses running in the normal state, output the first control signal; and in response to the second controller or at least one of the brake motors of the two rear wheel brake apparatuses being in the abnormal state, control the brakes of the two front wheel brake apparatuses and the brakes of the two rear wheel brake apparatuses to receive the brake force output by the backup brake apparatus. In this design, even if an exception occurs in the second controller or the brake motors of the two rear wheel brake apparatuses, the first controller can still brake the vehicle in time in the foregoing manners. This ensures driving safety of the vehicle.

In an implementation, the second controller is configured to send a second periodic signal to the first controller. The first controller is configured to: determine, in response to receiving the second periodic signal within a predetermined period, that the second controller is in the normal state or the two rear wheel brake apparatuses are in the normal state; and determine, in response to not receiving the second periodic signal within the predetermined period, that the second controller or the at least one of the brake motors of the two rear wheel brake apparatuses is in the abnormal state. The second controller sends a periodic signal to the first controller, so that the first controller can accurately determine a state of the second controller or states of the two rear wheel brake apparatuses, so that the first controller can brake the vehicle in a proper brake manner in time.

In an implementation, the second controller is configured to: in response to receiving the first control signal, control the brake motors of the two rear wheel brake apparatuses to output the brake forces; and in response to not receiving the first control signal within a preset time before or after the brake signal is received, control the brake motors of the two rear wheel brake apparatuses to output the brake forces, or control the brakes of the two front wheel brake apparatuses and the brakes of the two rear wheel brake apparatuses to receive the brake force output by the backup brake apparatus. If the second controller does not receive the first control signal within the preset time after receiving the brake signal, it indicates that the first controller is abnormal. Therefore, the second controller can brake the vehicle in time in the foregoing two manners, to ensure driving safety of the vehicle.

In an implementation, the backup brake apparatus includes a driving mechanism and a backup motor. The driving mechanism is separately in driving connections to the brakes of the two front wheel brake apparatuses and the brakes of the two rear wheel brake apparatuses. The backup motor is configured to connect or disconnect a driving connection between the driving mechanism and the brake pedal of the vehicle. In a case in which the backup motor connects the driving mechanism and the brake pedal of the vehicle, the backup brake apparatus outputs the brake force to the brakes of the two front wheel brake apparatuses and the brakes of the two rear wheel brake apparatuses. In a case in which the backup motor disconnects the driving mechanism from the brake pedal of the vehicle, the backup brake apparatus cannot output the brake force to the brakes of the two front wheel brake apparatuses and the brakes of the two rear wheel brake apparatuses.

In an implementation, the first controller is configured to control the backup motor to connect the driving connection between the driving mechanism and the brake pedal of the vehicle, so that the brakes of the two front wheel brake apparatuses and the brakes of the two rear wheel brake apparatuses receive the brake force output by the backup brake mechanism. The second controller is configured to control the backup motor to connect the driving connection between the driving mechanism and the brake pedal of the vehicle, so that the brakes of the two front wheel brake apparatuses and the brakes of the two rear wheel brake apparatuses receive the brake force output by the backup brake mechanism.

In an implementation, the first controller includes a first communication interface. The second controller includes a second communication interface. The first communication interface is communicatively connected to the second communication interface, so that the first controller sends the first control signal to the second communication interface of the second controller through the first communication interface.

For example, the first communication interface and the second communication interface respectively are serial peripheral interfaces.

In an implementation, the first controller further includes a first input interface, a second input interface, a first output interface, and a second output interface. The first input interface of the first controller is configured to receive the vehicle travel signal. The second input interface of the first controller is configured to receive the brake signal output by the brake pedal of the vehicle. The first output interface of the first controller is in signal connections to the brake motors of the two front wheel brake apparatuses. The second output interface of the first controller is in a signal connection to the backup brake apparatus.

In an implementation, the second controller further includes a first input interface, a first output interface, and a second output interface. The first input interface of the second controller is configured to receive the brake signal output by the brake pedal of the vehicle. The first output interface of the second controller is in signal connections to the brake motors of the two rear wheel brake apparatuses. The second output interface of the second controller is in a signal connection to the backup brake apparatus.

In an implementation, the brake system further includes a first power supply and a second power supply. The first power supply is configured to supply power to the first controller and the brake motors of the two front wheel brake apparatuses, to ensure running of the first controller and the brake motors of the two front wheel brake apparatuses. The second power supply is configured to supply power to the second controller and the brake motors of the two rear wheel brake apparatuses, to ensure running of the second controller and the brake motors of the two rear wheel brake apparatuses.

In addition, if the first power supply is abnormal, an exception occurs in the first controller and the brake motors of the two front wheel brake apparatuses. In this case, the second controller controls, based on the brake signal, the brake motors of the two rear wheel brake apparatuses to output the brake forces, or controls the brakes of the two front wheel brake apparatuses and the brakes of the two rear wheel brake apparatuses to receive the brake force output by the backup brake apparatus.

Similarly, if the second power supply is abnormal, an exception occurs in the second controller and the brake motors of the two rear wheel brake apparatuses. In this case, the first controller controls the brakes of the two front wheel brake apparatuses and the brakes of the two rear wheel brake apparatuses to receive the brake force output by the backup brake apparatus.

In an implementation, the second controller is configured to send, by the second controller in response to the first controller or at least one of the brake motors of the two front wheel brake apparatuses being in the abnormal state, a first alarm signal to a first alarm of the vehicle, where the first alarm signal is used to indicate the first alarm to provide an alert. Similarly, the first controller is configured to send, by the first controller in response to the second controller or at least one of the brake motors of the two rear wheel brake apparatuses being in the abnormal state, a second alarm signal to a second alarm of the vehicle, where the second alarm signal is used to indicate the second alarm to provide an alert. According to this solution, a driver or another passenger in the vehicle can learn an abnormal state of the brake system in time, to perform processing in time. This helps reduce safety accidents.

According to a second aspect, this application further provides a vehicle. The vehicle includes two front wheels, two rear wheels, and the brake system in any implementation of the first aspect. The two front wheel brake apparatuses are separately configured to brake the two front wheels. The two rear wheel brake apparatuses are separately configured to brake the two rear wheels. Based on a design in which the first controller and the second controller of the brake system provide redundancy for each other, the vehicle can implement brake under control of any controller. Therefore, brake safety of the vehicle is high. In addition, because cabling of the brake system is simple, difficulty of assembling the vehicle can be decreased to some extent.

According to a third aspect, this application further provides a controller of a brake system. The controller is configured to: based on a vehicle travel signal and a brake signal that is output by a brake pedal of a vehicle, output a first control signal, and control brake motors of two front wheel brake apparatuses of the brake system to output brake forces, or control brakes of the two front wheel brake apparatuses and brakes of two rear wheel brake apparatuses of the brake system to receive a brake force output by a backup brake apparatus of the brake system. The first control signal is used to indicate another controller of the brake system to control the brake motors of the two rear wheel brake apparatuses of the brake system to output the brake forces.

In this application, the controller of the brake system can control the brake motors of the two front wheel brake apparatuses to output the brake forces, indicate the another controller of the brake system to control the brake motors of the two rear wheel brake apparatuses to output the brake forces, and control the backup brake apparatus to output the brake force to the brakes of the two front wheel brake apparatuses and the brakes of the two rear wheel brake apparatuses. In this way, when one control manner cannot be implemented, the controller can also brake the vehicle in another control manner. In this way, the brake safety of the vehicle is effectively improved.

In an implementation, the controller is configured to: in response to the another controller of the brake system and the two rear wheel brake apparatuses running in a normal state, output the first control signal; and the controller controls, in response to the another controller of the brake system and at least one of the brake motors of the two rear wheel brake apparatuses being in an abnormal state, the brakes of the two front wheel brake apparatuses and the brakes of the two rear wheel brake apparatuses to receive the brake force output by the backup brake apparatus. In this design, even if an exception occurs in the another controller of the brake system or the brake motors of the two rear wheel brake apparatuses, the controller can still brake the vehicle in time in the foregoing manners. This ensures driving safety of the vehicle.

### BRIEF DESCRIPTION OF DRAWINGS

FIG. 1 is a schematic diagram of a vehicle according to an embodiment of this application;
FIG. 2 is a schematic diagram of a brake system according to an embodiment of this application; and
FIG. 3 is a diagram of a specific architecture of a brake system according to an embodiment of this application.

### DESCRIPTION OF EMBODIMENTS

To make objectives, technical solutions, and advantages of this application clearer, the following further describes embodiments of this application in detail with reference to accompanying drawings. However, example implementations can be implemented in a plurality of forms, and should not be construed as being limited to the implementations described herein. The same reference numerals in the accompanying drawings represent the same or similar structures, and repeated descriptions are omitted. Words for expressing positions and directions in embodiments of this application are described by using the accompanying drawings as examples. However, changes may be made as required, and all changes shall fall within the protection scope of this application. The accompanying drawings in embodiments of this application are merely used to show a relative position relationship, and do not represent a real proportion.

It should be noted that specific details are described below to facilitate understanding of this application. However, embodiments of this application can be implemented in a plurality of manners different from those described herein, and a person skilled in the art can perform similar promotion without departing from the connotation of embodiments of this application. Therefore, this application is not limited to the specific implementations disclosed below.

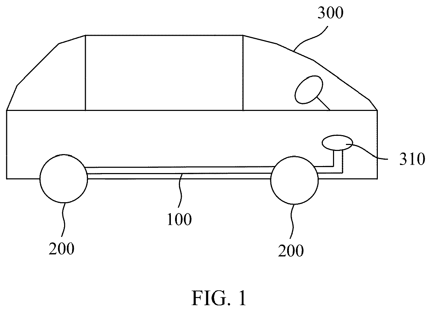

FIG. 1 is a schematic diagram of a vehicle according to an embodiment of this application. Refer to FIG. 1. The vehicle provided in this embodiment of this application includes a double-backup brake system 100 and a plurality of wheels 200. The brake system 100 is configured to brake the plurality of vehicles, to stop a moving vehicle.

In an embodiment, the vehicle further includes a vehicle body 300, and the vehicle body 300 is supported on the plurality of wheels 200 of the vehicle. A brake pedal 310 is disposed in a passenger compartment of the vehicle body 300. In response to a treading operation of a driver, the brake pedal 310 is configured to output a brake signal. The brake signal includes travel information or a treading force applied by a foot. In specific implementation, the brake pedal 310 includes a pedal body and a pedal travel sensor. The pedal travel sensor is configured to detect and output travel information of the brake pedal.

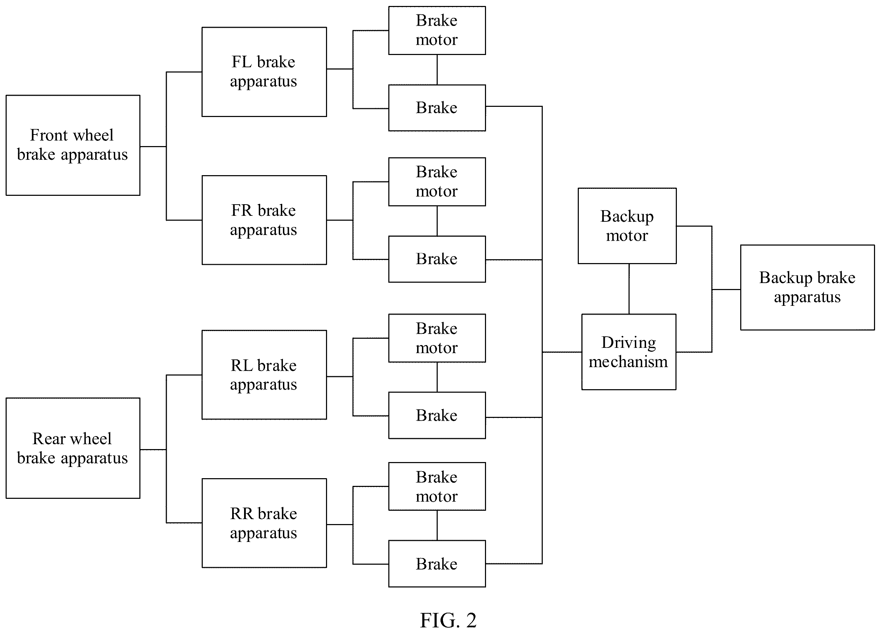

FIG. 2 is a schematic diagram of a brake system according to an embodiment of this application. Refer to FIG. 1 and FIG. 2. In this embodiment of this application, the vehicle is a dual-axis vehicle, and the plurality of wheels include two front wheels and two rear wheels. The two front wheels are a front left (front left, FL) wheel and a front right (front right, FR) wheel. The two rear wheels are a rear left (rear left, RL) wheel and a rear right (rear right, RR) wheel. The brake system includes two front wheel brake apparatuses and two rear wheel brake apparatuses. The two front wheel brake apparatuses are separately used to brake the two front wheels, and the two rear wheel brake apparatuses are separately used to brake the two rear wheels. For ease of description, in this embodiment of this application, a front wheel brake apparatus used to brake the FL wheel is an FL brake apparatus, a front wheel brake apparatus used to brake the FR wheel is an FR brake apparatus, a rear wheel brake apparatus used to brake the RL wheel is an RL brake apparatus, and a rear wheel brake apparatus used to brake the RR wheel is an RR brake apparatus.

In this embodiment of this application, the two front wheel brake apparatuses and the two rear wheel brake apparatuses respectively are EMBs. The front wheel brake apparatuses and the rear wheel brake apparatuses each include a brake motor and a brake. The brake motor is configured to output a brake force to the brake, so that the brake brakes the wheel of the vehicle. For example, a brake motor of the FL brake apparatus is configured to output a brake force to a brake of the FL brake apparatus, so that the FL brake apparatus brakes the FL wheel. A brake motor of the FR brake apparatus is configured to output a brake force to a brake of the FR brake apparatus, so that the FR brake apparatus brakes the FR wheel. A brake motor of the RL brake apparatus is configured to output a brake force to a brake of the RL brake apparatus, so that the RL brake apparatus brakes the RL wheel. A brake motor of the RR brake apparatus is used to output a brake force to a brake of the RR brake apparatus, so that the RR brake apparatus brakes the RR wheel.

In an embodiment, each brake includes a brake caliper and a brake disc. An output shaft of the brake motor is drivingly connected to the brake caliper by a driving element. The brake disc is disposed in a clamping space of the brake caliper. The brake disc is fixedly connected to a corresponding rim. The brake motor is used to drive the brake caliper to tighten or loosen the brake disc, so that the brake caliper can apply a brake force to the wheel when the brake caliper tightens the brake disc, and brake of the wheel can be released when the brake caliper loosens the brake disc.

In this embodiment of this application, the brake system further includes a backup brake apparatus. The backup brake apparatus is also configured to output a brake force to the brakes of the two front wheel brake apparatuses and the brakes of the two rear wheel brake apparatuses, so that the brakes of the two front wheel brake apparatuses separately brake the FL wheel and the FR wheel, and the brakes of the two rear wheel brake apparatuses separately brake the RL wheel and the RR wheel.

In this embodiment of this application, the backup brake apparatus includes a driving mechanism and a backup motor. The driving mechanism is separately in driving connections to the brakes of the two front wheel brake apparatuses and the brakes of the two rear wheel brake apparatuses. The backup motor is configured to connect or disconnect a driving connection between the driving mechanism and a brake pedal of the vehicle. When the backup motor connects the driving connection between the driving mechanism and the brake pedal of the vehicle, a treading force applied by a foot of a driver to the brake pedal is transferred to the brakes of the front wheel brake apparatuses and the brakes of the rear wheel brake apparatuses through the driving mechanism. The backup motor disconnects the driving connection between the driving mechanism and the brake pedal of the vehicle. A treading force applied by a foot of the driver to the brake pedal triggers the brake motors to drive the brakes of the front wheel brake apparatuses and the brakes of the rear wheel brake apparatuses.

In an embodiment, when the backup motor connects the driving connection between the driving mechanism and the brake pedal of the vehicle, running of the backup motor corresponds to the treading force applied by the foot of the driver to the brake pedal, so that the brakes of the front wheel brake apparatuses and the brakes of the rear wheel brake apparatuses are driven by the driving mechanism. When the backup motor disconnects the driving connection between the driving mechanism and the brake pedal of the vehicle, running of the backup motor does not correspond to the treading force applied by the foot of the driver to the brake pedal.

In an implementation, the driving mechanism includes four output ends and one input end. The four output ends of the driving mechanism are separately in driving connections to the brakes of the two front wheel brake apparatuses and the brakes of the two rear wheel brake apparatuses. The input end of the driving mechanism stays in the driving connection to the brake pedal or breaks the driving connection to the brake pedal when driven by the backup motor. In a case in which the backup motor connects the driving connection between the input end of the driving mechanism and the brake pedal of the vehicle, the treading force applied by the foot of the driver to the brake pedal is transferred to the brakes of the front wheel brake apparatus and the brakes of the rear wheel brake apparatus separately through the four output ends of the driving mechanism, so that the two front wheel brake apparatuses and the two rear wheel brake apparatuses can separately brake the two front wheels and the two rear wheels.

Based on the foregoing descriptions of the front wheel brake apparatuses, the rear wheel brake apparatuses, and a backup brake apparatus, it can be learned that the brake is configured to: receive a brake force output by the brake motor or a brake force output by a backup brake apparatus, and brake a wheel of the vehicle. For ease of description, in this embodiment of this application, a brake mode in which the brake receives the brake force output by the brake motor and brakes the wheel of the vehicle is referred to as a first brake mode, and a brake mode in which the brake receives the brake force output by the backup brake apparatus and brakes the wheel of the vehicle is referred to as a second brake mode.

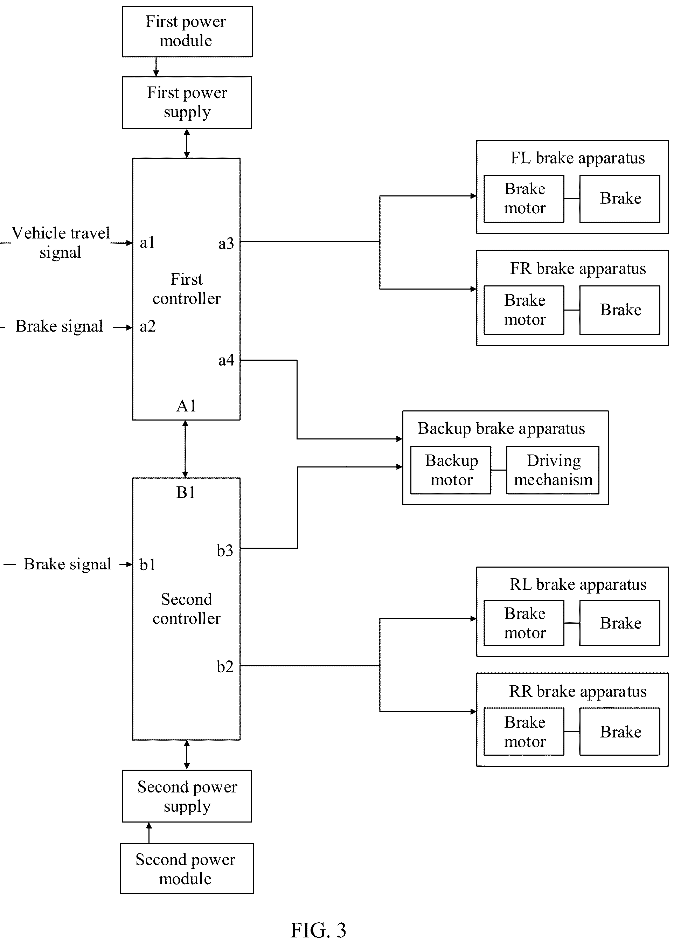

FIG. 3 is a diagram of a specific architecture of a brake system according to an embodiment of this application. Refer to FIG. 3. In this embodiment of this application, the brake system further includes a first controller and a second controller. The first controller is communicatively connected to the second controller. In an implementation, the first controller includes a first communication interface A1, the second controller includes a second communication interface B1, and the first communication interface A1 is communicatively connected to the second communication interface B1. For example, the first communication interface A1 and the second communication interface B1 respectively are serial peripheral interfaces (serial peripheral interfaces, SPIs).

In this embodiment of this application, the first controller further includes a first input interface a1, a second input interface a2, a first output interface a3, and a second output interface a4. The first input interface a1 of the first controller is configured to receive a vehicle travel signal. The second input interface a2 of the first controller is configured to receive a brake signal output by a brake pedal of a vehicle. The first output interface a3 of the first controller is in signal connections to brake motors of two front wheel brake apparatuses. The second output interface a4 of the first controller is in a signal connection to a backup brake apparatus.

The vehicle travel signal includes vehicle speed information, wheel speed information, vehicle quality, a slope of a road on which the vehicle is located, and running information about a plurality of systems such as an antilock brake system (antilock brake system, ABS), a traction control system (traction control system, TCS), and electronic stability control (electronic stability control, ESC). For example, the first controller is connected to a plurality of systems such as an ABS, a TCS, and ESC through a bus of the vehicle, to obtain running information about these systems. The bus includes an Ethernet bus, a controller local area network (controller area network, CAN) bus, or the like.

In this embodiment of this application, the second controller further includes a first input interface b1, a first output interface b2, and a second output interface b3. The first input interface b1 of the second controller is configured to receive a brake signal output by the brake pedal of the vehicle. The first output interface b2 of the second controller is configured to be in signal connections to brake motors of two rear wheel brake apparatuses. The second output interface b3 of the second controller is in a signal connection to the backup brake apparatus.

It can be learned from the foregoing descriptions of the interfaces of the first controller and the second controller that, compared with that of the first controller, an input signal of the second controller does not include a vehicle travel signal. Therefore, the second controller does not need to be in a signal connection to another system of the vehicle. In this way, cabling difficulty of the brake system can be decreased, and a requirement on signal processing performance of the second controller can be lower. This helps reduce costs of the brake system. In addition, because there is no signal connection relationship between the first controller and the two rear wheel brake apparatuses, and there is no signal connection relationship between the second controller and the two front wheel brake apparatuses, cabling difficulty of the brake system can be further decreased, to decrease difficulty of deploying the brake system on the vehicle.

In this embodiment of this application, the first controller is configured to: based on the vehicle travel signal and a brake signal that is output by the brake pedal of the vehicle, output a first control signal, and control the brake motors of the two front wheel brake apparatuses to output brake forces, or control the brakes of the two front wheel brake apparatuses and the brakes of the two rear wheel brake apparatuses to receive a brake force output by the backup brake apparatus. The second controller is configured to: control, based on the first control signal, the brake motors of the two rear wheel brakes to output brake forces, or based on the brake signal, control the brake motors of the two rear wheel brake apparatuses to output brake forces, or control the brakes of the two front wheel brake apparatuses and the brakes of the two rear wheel brake apparatuses to receive a brake force output by the backup brake apparatus.

In an embodiment, the first controller is configured to: receive the vehicle travel signal through the first input interface a1, and receive travel information of the brake pedal through the second input interface a2. Based on the vehicle travel signal and the travel information of the brake pedal, the first controller outputs the first control signal to the second controller, and controls the brake motors of the FL brake apparatus and the FR brake apparatus to output brake forces. The first controller can accurately calculate a brake force required by each wheel of the vehicle in a current state by comprehensively analyzing and processing the vehicle travel signal and the travel information of the brake pedal. Then the first controller controls the brake motors of the FL brake apparatus and the FR brake apparatus to separately output brake forces required by the two front wheels to the corresponding brakes, so that the brake of the FL brake apparatus and the brake of the FR brake apparatus separately perform brake in the first brake mode. In addition, the first controller outputs the first control signal to the second controller through the first communication interface A1. The first control signal includes brake force information required by the two rear wheels.

In an embodiment, the first controller is configured to control the brakes of the FL brake apparatus, the FR brake apparatus, the RL brake apparatus, and the RR brake apparatus to separately receive a brake force output by the backup brake apparatus, so that the brakes of the FL brake apparatus, the FR brake apparatus, the RL brake apparatus, and the RR brake apparatus separately perform brake in the second brake mode. In an implementation, the first controller is configured to control a backup motor to connect a driving connection between a driving mechanism and the brake pedal, so that the brakes of the FL brake apparatus, the FR brake apparatus, the RL brake apparatus, and the RR brake apparatus receive a brake force output by the backup brake apparatus.

In an embodiment, the second controller is configured to receive, through the second communication interface B1, the first control signal sent by the first controller. The second controller controls, based on the first control signal, the brake motors of the RL brake apparatus and the RR brake apparatus to separately output brake forces required by the two rear wheels to the corresponding brakes, so that the brakes of the RL brake apparatus and the RR brake apparatus separately perform brake in the first brake mode.

In an embodiment, the second controller is configured to receive the travel information of the brake pedal through the first input interface b1. The second controller calculates, based on the travel information of the brake pedal, brake forces required by the two rear wheels of the vehicle in a current state. Then the second controller controls the brake motors of the RL brake apparatus and the RR brake apparatus to separately output brake forces required by the two rear wheels to the corresponding brakes, so that the two rear wheels separately perform brake in the first brake mode. Alternatively, the second controller is configured to control the brakes of the FL brake apparatus, the FR brake apparatus, the RL brake apparatus, and the RR brake apparatus to separately receive a brake force output by the backup brake apparatus, so that the brakes of the FL brake apparatus, the FR brake apparatus, the RL brake apparatus, and the RR brake apparatus separately perform brake in the second brake mode. In an implementation, the second controller is configured to control the backup motor to connect the driving connection between the driving mechanism and the brake pedal, so that the brakes of the FL brake apparatus, the FR brake apparatus, the RL brake apparatus, and the RR brake apparatus receive a brake force output by the backup brake apparatus.

In this embodiment of this application, the second controller is configured to: in response to the first controller and the two front wheel brake apparatuses running in a normal state, control, by the second controller based on the first control signal, the brake motors of the two rear wheel brake apparatuses to output brake forces, so that the brakes of the two rear wheel brake apparatuses separately perform brake in the first brake mode. Because the first controller can accurately calculate the brake force required by each wheel, brake safety of the vehicle can be effectively improved in this case.

In addition, the second controller is configured to: in response to the first controller or at least one of the brake motors of the two front wheel brake apparatuses being in an abnormal state, control, by the second controller based on the brake signal, the brake motors of the two rear wheel brake apparatuses to output brake forces, so that the two rear wheels separately perform brake in the first brake mode. Alternatively, the second controller is configured to: in response to the first controller or at least one of the brake motors of the two front wheel brake apparatuses being in an abnormal state, control, by the second controller, the brakes of the two front wheel brake apparatuses and the brakes of the two rear wheel brake apparatuses to receive the brake force output by the backup brake apparatus, so that the brakes of the FL brake apparatus, the FR brake apparatus, the RL brake apparatus, and the RR brake apparatus separately perform brake in the second brake mode. In this design, even if an exception occurs in the first controller or the brake motors of the FL brake apparatus and the FR brake apparatus, the second controller can still brake the vehicle in time in the foregoing two manners. This ensures driving safety of the vehicle.

In this embodiment of this application, the first controller is configured to send a first periodic signal to the second controller. The second controller is configured to determine, by the second controller in response to receiving the first periodic signal within a predetermined period, that the first controller is in the normal state or the two front wheel brake apparatuses are in the normal state. In addition, the second controller is configured to determine, by the second controller in response to not receiving the first periodic signal within the predetermined period, that the first controller or the at least one of the brake motors of the two front wheel brake apparatuses is in the abnormal state. In this embodiment, the first controller sends a periodic signal to the second controller, so that the second controller can accurately and effectively determine a normal or abnormal state of the first controller, the FL brake apparatus, or the FR brake apparatus, so that the second controller brakes the vehicle in a proper brake manner in time based on a state of the first controller or states of the FL brake apparatus and the FR brake apparatus.

In this embodiment of this application, the first controller is configured to: in response to the second controller and the two front wheel brake apparatuses running in a normal state, output, by the first controller, the first control signal, and control the brake motors of the two front wheel brake apparatuses to output brake forces, so that the brakes of the two front wheel brake apparatuses separately perform brake in the first brake mode, and the second controller controls, based on the first control signal, the two rear wheel brake apparatuses separately perform brake in the first brake mode. Because the first controller can accurately calculate the brake force required by each wheel, brake safety of the vehicle can be effectively improved in this case.

In addition, the first controller in response to the second controller or at least one of the brake motors of the two rear wheel brake apparatuses being in the abnormal state, the first controller controls the brakes of the two front wheel brake apparatuses and the brakes of the two rear wheel brake apparatuses to receive the brake force output by the backup brake apparatus, so that the brakes of the FL brake apparatus, the FR brake apparatus, the RL brake apparatus, and the RR brake apparatus separately perform brake in the second brake mode. In this design, even if an exception occurs in the second controller or the brake motors of the RL brake apparatus and the RR brake apparatus, the first controller can still brake the vehicle in time in the foregoing manners. This ensures driving safety of the vehicle.

In this embodiment of this application, the second controller is configured to send a second periodic signal to the first controller. The first controller is configured to determine, by the first controller in response to receiving the second periodic signal within a predetermined period, that the second controller is in the normal state or the two rear wheel brake apparatuses are in the normal state. In addition, the first controller is configured to determine, by the first controller in response to not receiving the second periodic signal within the predetermined period, that the second controller or the at least one of the brake motors of the two rear wheel brake apparatuses is in the abnormal state. In this embodiment, the second controller sends a periodic signal to the second controller, so that the first controller can accurately and effectively determine a normal or abnormal state of the second controller, the RL brake apparatus, or the RR brake apparatus, so that the first controller brakes the vehicle in a proper brake manner in time based on a state of the second controller or states of the RL brake apparatus and the RR brake apparatus.

In this embodiment of this application, the second controller is configured to control, in response to receiving the first control signal, the brake motors of the two rear wheel brake apparatuses to output the brake forces. In addition, the second controller is configured to control, by the second controller in response to not receiving the first control signal within a preset time before or after the brake signal is received, the brake motors of the two rear wheel brake apparatuses to output the brake forces; or the second controller is configured to control, by the second controller in response to not receiving the first control signal within a preset time before or after the brake signal is received, the brakes of the two front wheel brake apparatuses and the brakes of the two rear wheel brake apparatuses to receive the brake force output by the backup brake apparatus. If the second controller does not receive the first control signal within the preset time after receiving the brake signal, it indicates that the first controller is abnormal. In this case, the second controller brakes the vehicle in time in the foregoing two manners, to ensure driving safety of the vehicle.

Still refer to FIG. 3. In this embodiment of this application, the brake system further includes a first power supply and a second power supply. The first power supply is configured to supply power to the first controller and the brake motors of the two front wheel brake apparatuses, and the second power supply is configured to supply power to the second controller and the brake motors of the two rear wheel brake apparatuses. For example, both the first power supply and the second power supply are connected to an on-board battery of the vehicle, to obtain electric energy from the on-board battery.

In an embodiment, the brake system further includes a first power module and a second power module. The first power module is configured to perform power conversion on a voltage of the first power supply, so that a power supply voltage of the first power supply matches voltages of the first controller and the brake motors of the two front wheel brake apparatuses. The second power device is configured to perform power conversion on a voltage of the second power supply, so that a power supply voltage of the second power supply matches voltages of the second controller and the brake motors of the two rear wheel brake apparatuses. For example, the first power module includes a direct current/direct current (direct current/direct current, DC/DC) converter, and the second power module includes a DC/DC converter.

In this embodiment of this application, if power supply from the first power supply is abnormal, an exception occurs in the first controller and the brake motors of the two front wheel brake apparatuses, and the first controller cannot send the first periodic signal. In this case, according to the foregoing case in which the first controller or at least one of the brake motors of the two front wheel brake apparatuses is in the abnormal state, based on the brake signal, the second controller controls the brake motors of the two rear wheel brake apparatuses to output the brake forces, or controls the brakes of the two front wheel brake apparatuses and the brakes of the two rear wheel brake apparatuses to receive the brake force output by the backup brake apparatus.

Similarly, if power supply from the second power supply is abnormal, an exception occurs in the second controller and the brake motors of the two rear wheel brake apparatuses, and the second controller cannot send the second periodic signal. In this case, according to the foregoing case in which the second controller or at least one of the brake motors of the two rear wheel brake apparatuses is in the abnormal state, the first controller controls the brakes of the two front wheel brake apparatuses and the brakes of the two rear wheel brake apparatuses to receive the brake force output by the backup brake apparatus.

In an embodiment, a passenger compartment of the vehicle includes a first alarm and a second alarm. The second controller is configured to send, by the second controller in response to the first controller or at least one of the brake motors of the two front wheel brake apparatuses being in the abnormal state, a first alarm signal to the first alarm, where the first alarm signal is used to indicate the first alarm to provide an alert. Similarly, the first controller is configured to send, by the first controller in response to the second controller or at least one of the brake motors of the two rear wheel brake apparatuses being in the abnormal state, a second alarm signal to the second alarm, where the second alarm signal is used to indicate the second alarm to provide an alert. The first alarm and the second alarm are disposed, so that the driver or another passenger in the vehicle can learn an abnormal state of the brake system in time, to perform processing in time. This helps reduce safety accidents.

An embodiment of this application further provides a controller of a brake system. The controller is configured to: based on a vehicle travel signal and a brake signal that is output by a brake pedal of a vehicle, output a first control signal, and control brake motors of two front wheel brake apparatuses of the brake system to output brake forces, or control brakes of the two front wheel brake apparatuses and brakes of two rear wheel brake apparatuses of the brake system to receive a brake force output by a backup brake apparatus of the brake system, where the first control signal is used to indicate another controller of the brake system to control brake motors of the two rear wheel brake apparatuses of the brake system to output brake forces.

In this embodiment, the controller of the brake system can control the brake motors of the two front wheel brake apparatuses to output the brake forces, indicate the another controller of the brake system to control the brake motors of the two rear wheel brake apparatuses to output the brake forces, and control the backup brake apparatus to output the brake force to the brakes of the two front wheel brake apparatuses and the brakes of the two rear wheel brake apparatuses. In this way, when one control manner cannot be implemented, the controller can also brake the vehicle in another control manner. In this way, the brake safety of the vehicle is effectively improved.

In this embodiment of this application, the controller is configured to: in response to the another controller of the brake system and the two rear wheel brake apparatuses running in a normal state, output the first control signal, and control the brake motors of the two front wheel brake apparatuses to output the brake forces. In addition, the controller is configured to: in response to the another controller of the brake system or at least one of the brake motors of the two rear wheel brake apparatuses being in an abnormal state, the controller controls the brakes of the two front wheel brake apparatuses and the brakes of the two rear wheel brake apparatuses to receive the brake force output by the backup brake apparatus. In this design, even if an exception occurs in the another controller of the brake system or the brake motors of the two rear wheel brake apparatuses, the controller can still brake the vehicle in time in the foregoing manners. This ensures driving safety of the vehicle.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A dual-backup brake system of a vehicle, wherein the brake system comprises a first controller, a second controller, a backup brake apparatus, two front wheel brake apparatuses, and two rear wheel brake apparatuses, the front wheel brake apparatuses and the rear wheel brake apparatuses each comprise a brake motor and a brake, and the brake is configured to: receive a brake force output by the brake motor or the backup brake apparatus, and brake a wheel of the vehicle, wherein
the first controller is configured to: based on a vehicle travel signal and a brake signal that is output by a brake pedal of the vehicle, output a first control signal, and control brake motors of the two front wheel brake apparatuses to output brake forces, or control brakes of the two front wheel brake apparatuses and brakes of the two rear wheel brake apparatuses to receive the brake force output by the backup brake apparatus; and
the second controller is configured to: control, based on the first control signal, brake motors of the two rear wheel brake apparatuses to output brake forces, or based on the brake signal, control the brake motors of the two rear wheel brake apparatuses to output brake forces, or control the brakes of the two front wheel brake apparatuses and the brakes of the two rear wheel brake apparatuses to receive the brake force output by the backup brake apparatus.

2. The brake system according to claim 1, wherein the second controller is configured to:
in response to the first controller and the two front wheel brake apparatuses running in a normal state, control, based on the first control signal, the brake motors of the two rear wheel brake apparatuses to output the brake forces; and
in response to the first controller or at least one of the brake motors of the two front wheel brake apparatuses being in an abnormal state, based on the brake signal, control the brake motors of the two rear wheel brake apparatuses to output the brake forces, or control the brakes of the two front wheel brake apparatuses and the brakes of the two rear wheel brake apparatuses to receive the brake force output by the backup brake apparatus.

3. The brake system according to claim 1 or 2, wherein the first controller is configured to send a first periodic signal to the second controller, and the second controller is configured to:
determine, in response to receiving the first periodic signal within a predetermined period, that the first controller is in the normal state or the two front wheel brake apparatuses are in the normal state; and
determine, in response to not receiving the first periodic signal within the predetermined period, that the first controller or the at least one of the brake motors of the two front wheel brake apparatuses is in the abnormal state.

4. The brake system according to any one of claims 1 to 3, wherein the first controller is configured to:
in response to the second controller and the two rear wheel brake apparatuses running in the normal state, output the first control signal; and
in response to the second controller or at least one of the brake motors of the two rear wheel brake apparatuses being in the abnormal state, control the brakes of the two front wheel brake apparatuses and the brakes of the two rear wheel brake apparatuses to receive the brake force output by the backup brake apparatus.

5. The brake system according to any one of claims 1 to 4, wherein the second controller is configured to send a second periodic signal to the first controller, and the first controller is configured to:
determine, in response to receiving the second periodic signal within a predetermined period, that the second controller is in the normal state or the two rear wheel brake apparatuses are in the normal state; and
determine, in response to not receiving the second periodic signal within the predetermined period, that the second controller or the at least one of the brake motors of the two rear wheel brake apparatuses is in the abnormal state.

6. The brake system according to any one of claims 1 to 5, wherein the second controller is configured to:
in response to receiving the first control signal, control the brake motors of the two rear wheel brake apparatuses to output the brake forces; and
in response to not receiving the first control signal within a preset time before or after the brake signal is received, control the brake motors of the two rear wheel brake apparatuses to output the brake forces, or control the brakes of the two front wheel brake apparatuses and the brakes of the two rear wheel brake apparatuses to receive the brake force output by the backup brake apparatus.

7. The brake system according to any one of claims 1 to 6, wherein the backup brake apparatus comprises a driving mechanism and a backup motor, wherein
the driving mechanism is separately in driving connections to the brakes of the two front wheel brake apparatuses and the brakes of the two rear wheel brake apparatuses; and
the backup motor is configured to connect or disconnect a driving connection between the driving mechanism and the brake pedal of the vehicle.

8. The brake system according to claim 7, wherein the first controller is configured to control the backup motor to connect the driving connection between the driving mechanism and the brake pedal of the vehicle, so that the brakes of the two front wheel brake apparatuses and the brakes of the two rear wheel brake apparatuses receive the brake force output by the backup brake mechanism; and
the second controller is configured to control the backup motor to connect the driving connection between the driving mechanism and the brake pedal of the vehicle, so that the brakes of the two front wheel brake apparatuses and the brakes of the two rear wheel brake apparatuses receive the brake force output by the backup brake mechanism.

9. The brake system according to any one of claims 1 to 8, wherein the first controller comprises a first communication interface, the second controller comprises a second communication interface, and the first communication interface is communicatively connected to the second communication interface.

10. The brake system according to any one of claims 1 to 9, wherein the first controller further comprises a first input interface, a second input interface, a first output interface, and a second output interface, wherein
the first input interface of the first controller is configured to receive the vehicle travel signal;
the second input interface of the first controller is configured to receive the brake signal output by the brake pedal of the vehicle;
the first output interface of the first controller is in signal connections to the brake motors of the two front wheel brake apparatuses; and
the second output interface of the first controller is in a signal connection to the backup brake apparatus.

11. The brake system according to any one of claims 1 to 10, wherein the second controller further comprises a first input interface, a first output interface, and a second output interface, wherein
the first input interface of the second controller is configured to receive the brake signal output by the brake pedal of the vehicle;
the first output interface of the second controller is in signal connections to the brake motors of the two rear wheel brake apparatuses; and
the second output interface of the second controller is in a signal connection to the backup brake apparatus.

12. The brake system according to any one of claims 1 to 11, wherein the brake system further comprises a first power supply and a second power supply, wherein
the first power supply is configured to supply power to the first controller and the brake motors of the two front wheel brake apparatuses; and
the second power supply is configured to supply power to the second controller and the brake motors of the two rear wheel brake apparatuses.

13. A vehicle, comprising two front wheels, two rear wheels, and the brake system according to any one of claims 1 to 12, wherein the two front wheel brake apparatuses are separately configured to brake the two front wheels, and the two rear wheel brake apparatuses are separately configured to brake the two rear wheels.

14. A controller of a brake system, wherein the controller is configured to:
based on a vehicle travel signal and a brake signal that is output by a brake pedal of a vehicle, output a first control signal, and control brake motors of two front wheel brake apparatuses of the brake system to output brake forces, or control brakes of the two front wheel brake apparatuses and brakes of two rear wheel brake apparatuses of the brake system to receive a brake force output by a backup brake apparatus of the brake system, wherein
the first control signal is used to indicate another controller of the brake system to control brake motors of the two rear wheel brake apparatuses of the brake system to output brake forces.

15. The controller according to claim 14, wherein the controller is configured to:
in response to the another controller of the brake system and the two rear wheel brake apparatuses running in a normal state, output the first control signal; and
in response to the another controller of the brake system and at least one of the brake motors of the two rear wheel brake apparatuses being in an abnormal state, control the brakes of the two front wheel brake apparatuses and the brakes of the two rear wheel brake apparatuses to receive the brake force output by the backup brake mechanism.
